# EUROPEAN PATENT APPLICATION

(11) **EP 4 138 022 A1**
(43) Date of publication of application: **22.02.2023**
(21) Application number: 21275150.7
(22) Date of filing: 15.10.2021
(51) Int. Cl.: G06Q 30/06, G06Q 30/02, G06Q 50/00

(54) **A SOCIAL MEDIA INTERFACE**

(30) Priority: 20.08.2021 GB 202112005
(71) Applicant: Playrcart Limited, London W1B 5DL (GB)
(72) Inventor: Dormieux,, Glen, London, SE23 1DT (GB); Mason,, Richard, London, EC2A 3JG (GB)
(74) Representative: Potter Clarkson

(57) **Abstract**

The present invention provides a method for displaying an ad file within a social media platform to provide the user with a more intuitive and tailored way to conduct transactions from within a within a social media platform browser. A dedicated transactional resource is used to complete all the intermediate steps relating to the required transaction from within application libraries within an e-commerce platform. In preferred embodiments, social media platform browser is configured to deploy an ad file from a server or other content delivery network (CDN). The social media platform browser is further configured to be redirected to a location defined by a transaction URL associated with an interaction element displayed within the social media platform browser. The content owner can upload the ad files to a server or other CDN via a dashboard/user interface. The dedicated transactional resource can be configured to enable the desired functionality to be achieved.

## Description

### Background to the invention

The increase in the use of and reliance on social media platforms has led to an increased focus on utilising these platforms to advertise and sell products and services to the end user. Conventionally, the user would identify a product or service of interest within an online advertisement or social media post and would then be required to locate the product or service via separate searches using a web browser or through the use of embedded hyperlinks which redirect the user towards a webpage owned by the ad owner. The user is then required to navigate the entire website to locate the product of interest and subsequently complete the transaction using traditional transaction systems. In such cases the user is necessarily distracted by alternative items on the main website of the ad owner which can lead to reduced conversion rates from the initial redirect and can affect the sales of specific products.

### Summary of the invention

According to a first aspect of the invention there is provided a method for displaying an ad file within a social media platform, comprising the steps of: deploying the ad file to the social media platform; displaying the content of the ad file within a social media platform browser, including an interaction element which includes a transaction URL for a dedicated transactional resource associated with the ad file;detecting a user input associated with the interaction element; and, redirecting the social media platform browser to the transaction URL.

### Brief description of the drawings

An example of the present invention will now be described in detail with reference to the accompanying drawings, in which:
Figure 1 shows an example of a sequence of window views (a) to (h) displayed within a social media platform browser during deployment of an ad file;
Figure 2 shows a representation of an ad file and its associated content;
Figure 3 shows a flow diagram outlining a process of uploading and storing the ad file for subsequent retrieval;
Figure 4 shows an example of a social media platform browser configured to interact with external e-commerce applications via a video commerce platform architecture;
Figure 5 shows a flow diagram outlining a process for loading an ad file including locating external modules and e-commerce applications;
Figure 6 shows an overview of the social media platform browser and platform architecture, showing coding layers within an ad file;
Figure 7 illustrates dataflow between the social media platform browser and the e-commerce platform via a dedicated transactional resource;

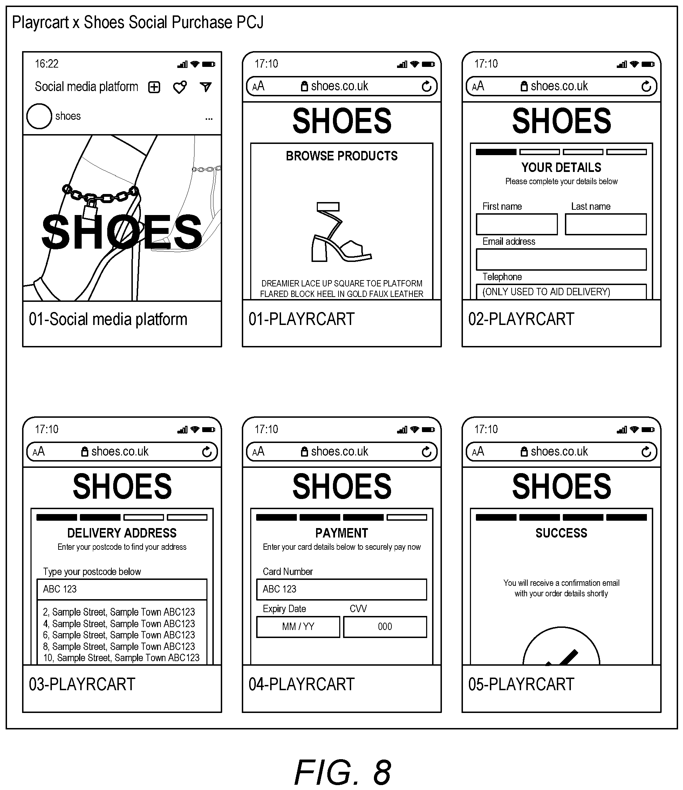

Figure 8 illustrates an example storyboard outlining a social media platform transaction for a typical retailer; and,

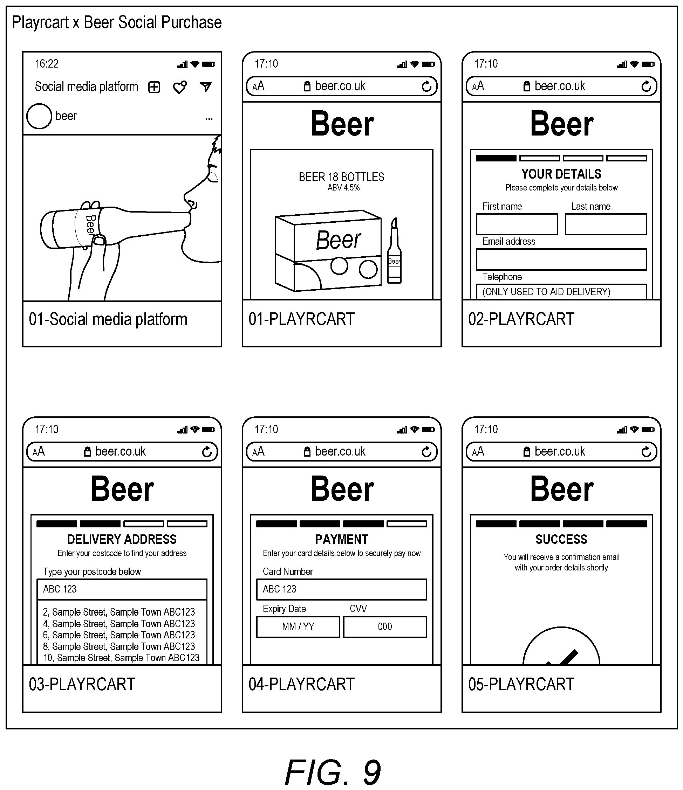

Figure 9 illustrates an example storyboard outlining a social media platform transaction for a manufacturer which does not otherwise have a direct to customer route.

### Detailed description

The present invention provides a streamlined checkout process to purchase products directly within social media platforms from social media ads and/or posts. The transactions are completed from within a social media platform browser of a social media platform itself.

The method includes deploying the ad file to the social media platform and displaying the content of the ad file within a social media platform browser. The social media platform can include the platform of any social media provider and the ad file can be provided in any format to be presented on the social media platform such as an advertisement or a post including text, audio, videos and images.

In some embodiments the ad file can be uploaded to multiple social media platforms via a single interface. In some examples the ad can be uploaded simultaneously and in certain other embodiments the ad can be uploaded according to a predetermined schedule as defined by the ad owner across a single social media platform or multiple different social media platforms.

In some embodiments a dedicated dashboard for social media Ad management can be used to curate, schedule and measure the performance of transactional ad campaigns across social media platforms from one interface.

The ad file is configured by the ad owner prior to being uploading to the social media platform. This can be done by the ad owner themselves or by a dedicated third party service provider. Once configured, the ad owner is provided with a transaction URL for a dedicated transactional resource associated with the ad file. This transaction URL is then embedded within the ad as an interaction element to be presented to the user.

In some embodiments, the interaction element is defined by one or more parameters/requirements of the social media platform browser.

Configuration of the ad file further includes determining how customer will engage with a third party to utilise a streamlined checkout flow from within the various multiple social media platforms.

The ad owner can upload the details of the products to enable the transactional resource to be configured for the specific products within the ad itself. The checkout flow can be customised to ensure that the transaction URL is only related to the content of the ad file to avoid distracting the end user thereby reducing the risk of failed conversion from the initial interaction with the ad.

Customisation of the checkout flow can include selections of Buy/Book/Capture/Donate options, as well as customising capture fields, and consent fields. Additionally, the ad owner can customise colours, fonts, layout elements, and the text for the ad file.

Once the ad has been customised, the dedicated transactional resource can be created. An associated dedicated URL link to the dedicated transactional resource is generated and provided to the ad owner. The URL link is hosted by a third party on behalf of the ad owner and the URL can be embedded or otherwise attached to the interaction element which can be presented to the user within the social media platform browser within the ad or the post.

While the ad file will be hosted by the social media platform and displayed using the social media platform browser, the dedicated transactional resource pages will be hosted by a third party platform.

In some examples the URL link will feature a custom subdomain including the client's name and will be hosted by a third party platform, e.g. https://[client-1].thirdparty.com/ , where "client-1" would specify the particular client and a subdomain hosted by the "third party". This URL link will redirect the social medium platform browser to the destination defined within the transaction URL and will present to the user a dedicated transactional resource associated with the ad file.

The dedicated transactional resource can be product specific to ensure the transaction associated with the ad file can be completed as efficiently as possible and without the added distractions of the user having to navigate through the vendors website. The approach also enables the ad owner to limit the options to only selected products once the user interacts with the ad thereby facilitating the sales of specific products and services. This is particularly important for short date or end of season lines and wherein the dedicated transactional resource can be configured to only display a limited selection of items.

In preferred embodiments the content associated with the dedicated URL is limited to only relate to the content of the ad file.

The dedicated transactional resource associated with the ad file is configured to be displayed within the social media platform browser itself. This ensures that the user is not directed away from the social media application. The transaction is therefore conducted upon detection of user input associated with the interaction element and can be completed within the same social media platform browser in which the ad file is being displayed without the need to load any additional windows or tabs. This allows for the user to complete the transaction in a seamless way utilising only minimal additional computing resources.

The social media platform may be any one of a variety of platforms to which a user can upload content. The content that can be uploaded can include media such as video, audio, images or text posts. Each of the posts/ads can be associated with particular products and or services. For simplicity, the media which is uploaded to the social media platforms will be referred to as an "ad file" throughout this disclosure. However, it should be noted that the ad file can relate to any type of post which can allow the social media platform browser to navigate to the dedicated transactional resource associated with the content of the social media post.

In preferred embodiments, the ad file is configured to define a transaction URL which can define the location of the dedicated transactional resource. The dedicated transactional resource is preferably a subdomain hosted by a third party on behalf of the ad owner. The ad file may also comprise information to retrieve additional media files from a server or other content delivery network (CDN) which serves the media file to the social media platform browser.

The social media platform is further configured to display the content of the ad file using a social media platform browser to deploy the ad file. The dedicated transactional resource will open within the social media platform browser which can be within the social media application itself. The end user will therefore not be redirected outside of these apps and will not require additional resources such as opening new windows or tabs.

The interaction element is configured to be displayed on the social media platform browser while the content from the ad file is being presented. Furthermore, the interaction element is an element that a user can interact with (e.g. an element of a user interface) to initiate a predefined action.

The dedicated transactional resource is further configured to display to the user the progress of the transaction. Once the transaction has been completed within the social media platform browser, the user may select to navigate to the main page of the ad owner or return back to the social media platform. This allows for a more bespoke experience to the end user where the dedicated transactional resource enables the transaction related to the ad file to be completed efficiently before providing further navigation options to the end user.

In preferred embodiments, the ad file is configured to display an interaction element at a predefined location within the social media platform browser according to the parameters stored within the ad file. These parameters may be defined by the content owner (or their proxy) via a dashboard/portal interface when configuring the ad file. The interaction element is presented by using a predefined element which can display an icon with the required action, for example "Buy", "Book", "Capture" or "Donate". It will be appreciated that the transaction may alternatively include registering for subscription services or filling out questionnaires, entering competitions or any other action which requires further input from the user. The relevant modules/applications required to fulfil those actions are identified when the parameters are added to the ad file.

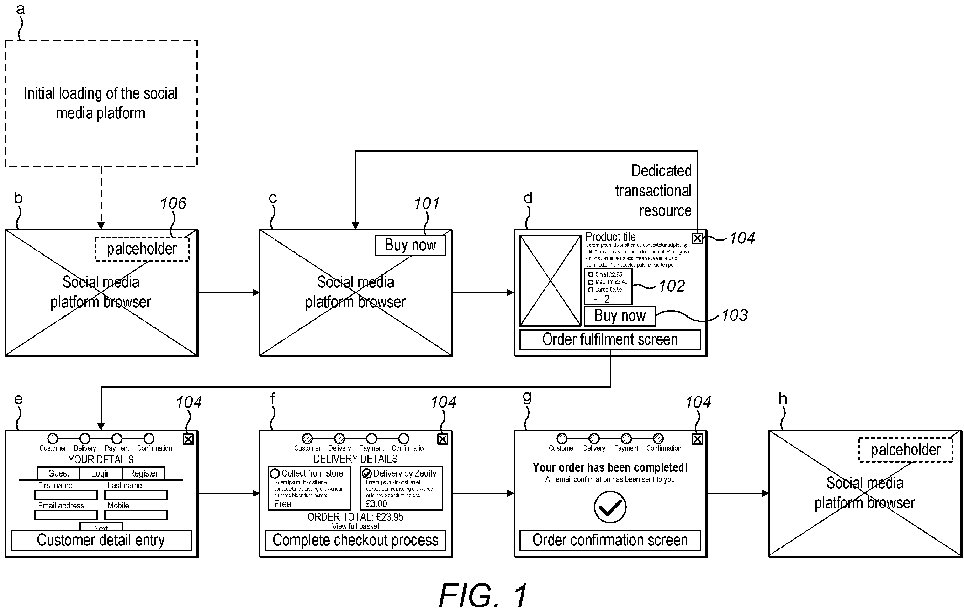

Figure 1 shows an example of a sequence of views (a) to (h) including the social media platform and the subsequent displays of the social media platform browser. These views show the initial loading of the social media platform in Figure 1a. Figure 1b shows the social media platform browser deploying the ad file which includes identifying the placeholder 106 for the interaction element. Figure 1c shows the social media platform browser displaying the ad file including the relevant interaction element 101. Figure 1d shows the initial view of the dedicated transactional resource as hosted on the third party server but displayed in the social media platform browser.

The example of Figure 1 is specifically directed towards making purchases. The social media platform browser views outlined in Figure 1 display the various stages of completing the transaction (figures 1d, 1e, 1f). For alternative functions different intermediate stages would be displayed.

The ad file can be deployed on any existing social media platform irrespective of whether the social media platform is being viewed on a computer or a smart device or any other user device.

Upon deploying the ad file, the social media platform is configured to initialize sections of the social media platform browser as placeholders 106 for displaying subsequent content as defined within the ad file as in window (1b). The ad file to be loaded can be defined by one or more of the hosting website, the advertiser, or a third party platform and stored on a dedicated ad server before being uploaded to the social media servers for subsequent deployment.

The interaction element 101 can be one of a "Buy Now" or "Book" or "capture" or "Donate" button or an icon to identify any other predefined action. This interaction element 101 is displayed as soon as the ad file is deployed by the social media platform browser.

Parameters relating to the interaction element 101 are defined within the ad file including defining the type of action: i.e. buy now, book, data capture or donate.

Additional parameters that can be identified within the ad file include but are not limited to:
identifying the type of checkout flow,
define available currencies,
define available languages,
general terms and conditions content,
stock control in place,
list of product details
stock/tickets availability,
fields for data capture,
donation settings (min max amounts etc).

Other parameters can also be defined depending on the type of transaction that is to be completed.

Parameters defined within the ad file can be selected by the content owner or the ad owner during the configuration of the ad file prior to being provided with a dedicated URL link to the dedicated transactional resource.

The interaction element can be configured to cover the social media platform browser or only a part of it, the interaction element can be semi-transparent or have sections which are transparent in order to avoid completely obscuring the content being displayed on the remainder of the social media platform browser. Each interaction element can be tailored by the content owner or alternatively, one of a pre-set number of interaction elements associated with each particular action can be selected for ease of use. Parameters of the interaction element that can be tailored include one or more of the colour schemes, the font, the specific icon parameters as well as incorporating the content owner branding within the interaction element if desired.

If the user interacts with the interaction element 101, the social media platform browser is configured to redirect to the transaction URL location. Once redirected the user can input details to complete the subsequent action using the dedicated transactional resource displayed within the social media platform browser. User input includes one of clicking, hovering over, or other defined actions, these can be identified in the ad file when defining the parameters of interaction element.

The dedicated transactional resource in windows in the example of figure 1 (d) to (g) display a checkout process for completing a transaction. The dedicated transactional resource also allows the user to cancel the transaction by selecting a cancel icon 104 anytime during the checkout procedure which returns the user back to the view of the interaction element as defined in the ad file.

As shown in the figures, the social media platform browser displays the dedicated transactional resource within the social media platform browser, thereby avoiding the need for additional resources such as memory or processing power, as well as providing a much more intuitive experience for the user. The dedicated transactional resource is configured to enable the user to enter the required data for completing one of a plurality of predefined actions such as for example completing a purchase, making a donation, making a booking, or any other action requiring the completion of a data submission form (Figure 1e). The dedicated transactional resource presented for the alternative actions will be specific to the action selected.

The social media platform browser is configured to complete the desired transaction using any one of a plurality of existing fulfilment services and to render the progress of the transaction to the user within the dedicated transactional resource so as to avoid the need to navigate through additional windows which again saves on resources and provides a much more intuitive experience.

Once the desired action is completed, this is communicated to the user via updating the dedicated transactional resource and acknowledging this via the social media platform browser. The dedicated transactional resource may be configured to return the user to the social media platform browser and return the user to the ad file deployment page (Figure 1h).

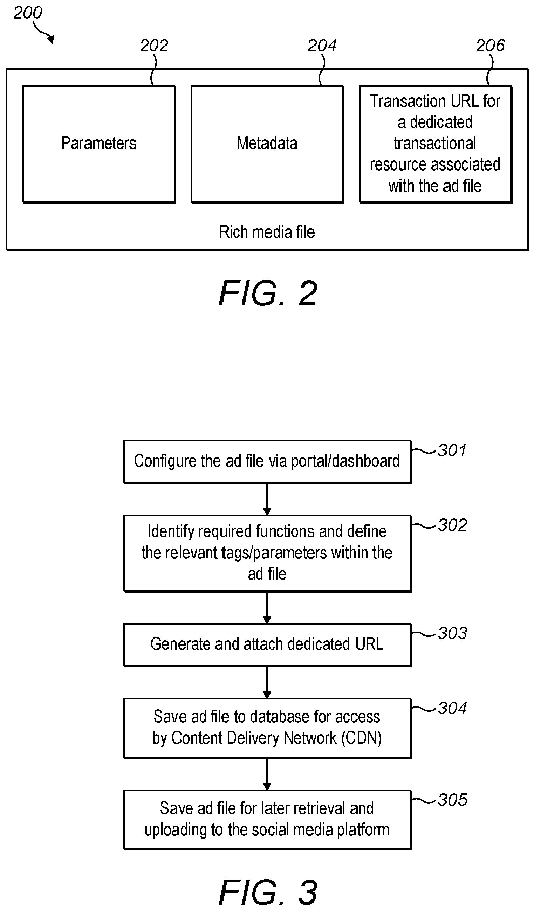

Figure 2 shows a representation of an ad file 200 and identifies some of the content that is stored within the ad file itself. The ad file can have information relating to the parameters 202, the metadata 204, as well as information relating to the external modules/media content 206 to be presented to the user as well as details of the transaction URL 208 for providing a dedicated transactional resource associated with the ad file.

Figure 3 shows an example flow diagram outlining a process of configuring and storing the ad file to be later uploaded to the social media platform and deployed by the social media platform browser. The process is achieved by using a user accessible portal/dashboard to configure and upload the ad file 301 to a server. The required functions for the social media platform browser are identified and added as metadata tags or other parameters within the ad file 302. The transaction URL for a dedicated transactional resource associated with the ad file is generated and attached 303 to the ad file. The transaction URL is configured to direct the social media platform browser to use the relevant content and application libraries during deployment of the ad file to subsequently achieve the required functionality. The ad file is stored in a database/ad server for access by the CDN. The ad file is stored for later retrieval and uploading to the social media platform 305.

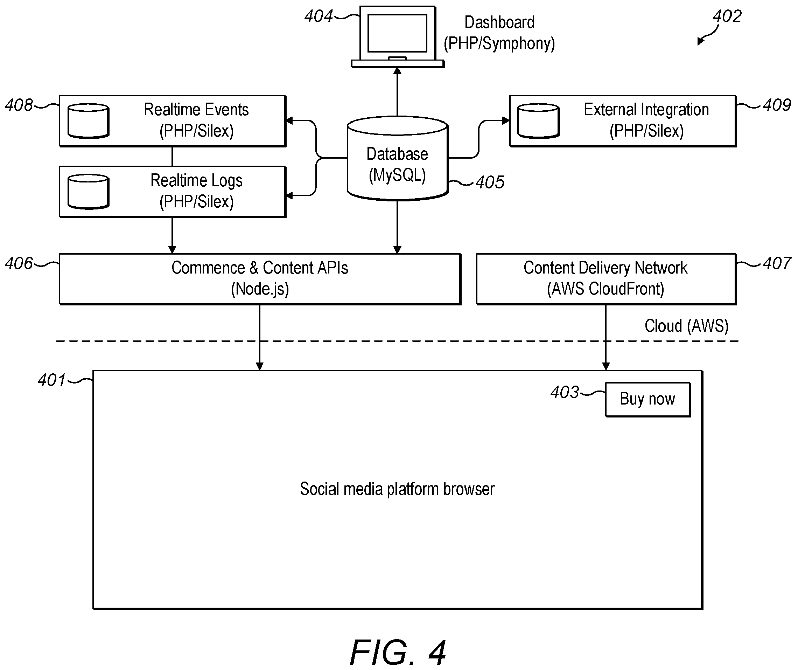

Figure 4 shows an example of a social media platform browser 401 and how it is configured to interact with external applications via an e-commerce platform architecture 402. The platform architecture 402 facilitates the arrangement of the various modules and external applications to enable the required actions to be completed within the social media platform browser 401. Figure 4 also shows a user dashboard 404 which can be used to upload and edit the initial ad file before storing the ad file in a database 405. The required ad file is uploaded to the social media platform from the database via the CDN 407. Alternatively, the ad file can be uploaded manually as a standard social media post with a link to the dedicated transaction URL. The metadata tags or other parameters added to the ad files are linked to the external modules 408, 409 via the e-commerce and content APIs 406, the external modules may also be linked to third party systems for fulfilment of orders and other transactions. This can be achieved using hyperlinks or other alternatives which cause the required application to be launched upon the interaction element being selected from within the social media platform browser.

The ad files are currently defined using an industry standard protocol such as HTML5. The HTML5 is used to define the parameters or metadata tags within each of the ad files. However, any other suitable programming languages such as Java-script, Cascading Style Sheets (CSS) and predefined secure APIs can be equally used.

The embodiment shown in Figure 4 allows content/ad owners to have secure access to the database that stores their content/ad/dedicated transactional resource so they can upload and edit the ad files as required. For instance, different products may be added to an existing ad file or a product/service may no longer be available and needs to be removed. The database can be stored on any number of secure servers such as local servers or cloud storage providers/ad servers.

The database 405 is updated by way of a dashboard/user interface or other user accessible portal. Access to the secure servers allows new content to be uploaded or existing content to be edited by the content owner alone, different content owners may have access to different databases or secure parts of the same database. The dashboard can also provide the content owner a suite of editing functions to enable the content owner to easily modify their ad file before uploading to the social media platform and deploying on the social media platform browser. The content owner may also edit the ad files offline using compatible protocols/languages. Ad files which are created without using the dashboard are assessed for compatibility with the technical architecture that is being implemented to ensure the ad file is compatible before storing the ad file in the server via the dashboard/user interface.

The content owner can use the dashboard to define the parameters of the interaction element and any subsequent actions which occur following detection of user input with the interaction element. Additional actions may also be defined for after completion of a range of predefined actions. Once the ad file has been edited, it is saved and stored in the database with a range of associated metadata tags or parameters to identify the ad file. The ad file is then stored ready to be uploaded to the asocial media platform as required.

Figure 4 also illustrates the use of APIs 406. These are pre-existing applications which can provide the required functionalities in the background without the user having to navigate to those individual pages. In the example of a purchase, the user would not be required to navigate to the merchant web site to place the order and would not subsequently be required to navigate to a separate web page to complete payment etc. This is especially convenient when product placement type advertisements are used, where navigating away from the content would not be desirable. The use of APIs also provides for a more robust and reliable system which can ensure high availability, high scalability, reliable commerce functionality including payment processing/fulfilment, with additional benefits including the ability to provide real-time statistics and data logging capabilities as well as ensuring reliable integration with third party systems.

The use of the pre-existing applications also provides options for transaction fulfilment from two or more third party systems which can be selected by the end user/customer. This is particularly favourable when there are multiple outlets which can supply a particular product or service. Giving the user the option to select from a number of possible third party systems such as different fulfilment partners can allow the user to have control over where the product is delivered from. This also provides the manufacturers a means to offer their products/services in a direct to consumer (D2C) manner without having to implement the necessary fulfilment procedures themselves. The choice of fulfilment partners also allows the user to select those third party systems which have adequate stock to ensure timely and complete delivery of the products and services selected which can lead to a better overall experience.

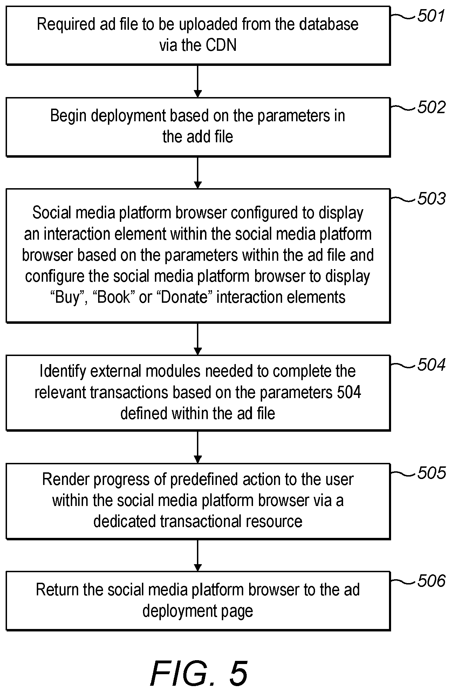

Figure 5 shows a flow diagram illustrating a process for deploying the ad file on the social media platform browser, including locating external modules and applications for providing required functions upon detecting input with the displayed interaction element. The process for deployment requires the desired ad file to be uploaded from the database via the CDN 501. For example, the ad file may be loaded/retrieved from a file location and hosted on the social media platform servers. The social media platform browser begins deployment based on the metadata tags or parameters in the ad file 502, it will be appreciated that the ad file can be one of a music video, a film, an advertisement, a video clip or any other rich media file. Furthermore, a rich media file in the context of this application can be taken to mean:
"*a file for an ad that includes advanced features like video, audio, or other elements that encourage viewers to interact and*/*or engage with the content. While text ads sell with words, and display ads sell with pictures, rich media ads offer more ways for the audience to interact and*/*or engage with an ad".*

Once deployed, the social media platform browser is configured to display an interaction element within the social media platform browser 503 based on the metadata tags or parameters in the ad file. It will be appreciated that the deployment step can be completed very quickly and so the interaction element 101 can be presented as soon as the social media platform browser deploys the ad file. Loading of the required interaction element also identifies the necessary external modules to complete the relevant transactions based on the metadata tags or parameters 504 defined within the ad file. The progress of the selected function is rendered to the user via subsequent screens within the social media platform browser based on being redirected to the dedicated transaction URL and based on the configuration of the dedicated transactional resource. Upon completion of the transaction 505, the social media platform browser can return to the initialization step based on a further parameter within the ad file or based on the further user input detected with the cancel icon 104. Alternatively a subsequent ad file may also be deployed within the social media platform browser.

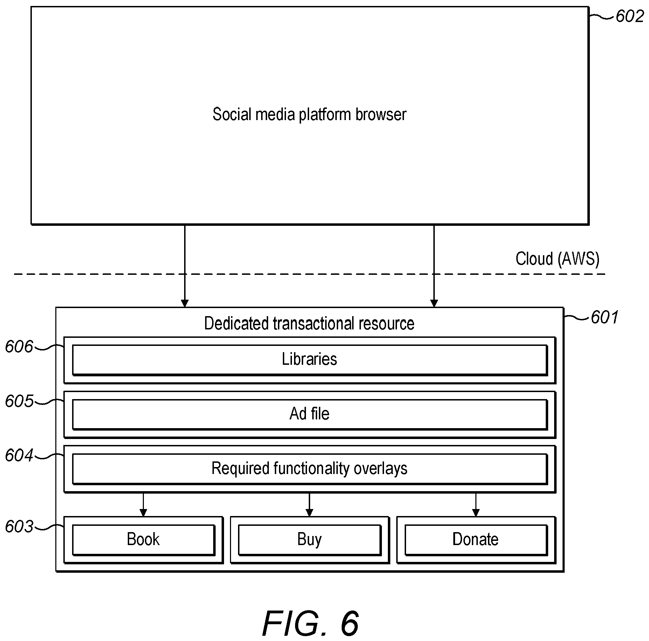

Figure 6 shows an example embodiment of the coding layers within the dedicated transactional resource which enables the required functionality to be achieved. The social media platform browser 602 is provided with a URL link to the dedicated transactional resource 601 which in the example of figure 6 is an e-commerce platform.

The dedicated transactional resource has predefined overlays 604 stored which allow the required functions to be realised 603.

The metadata tags or parameters direct the dedicated transactional resource to load the required applications and associated content libraries 606 required to deliver the necessary functionality to the user. In one example, the e-commerce and API client libraries as well as the e-commerce functionality are provided by external third-party providers and are integrated into the commerce platform. The example transactions shown in Figure 6 include, but are not limited to:
1) Making a booking or reservation
2) Purchasing of a product
3) Making a donation
4) Capturing user data.

The user can use the dashboard to apply metadata tags orparameters within specified fields for each ad file. The ad file content can be used to initialize the social media platform browser and the dedicated transactional resource. Furthermore, each of the ad files have associated metadata tags or parameters to identify the type of products/services on offer and how these are to be presented using the dedicated transactional resource.

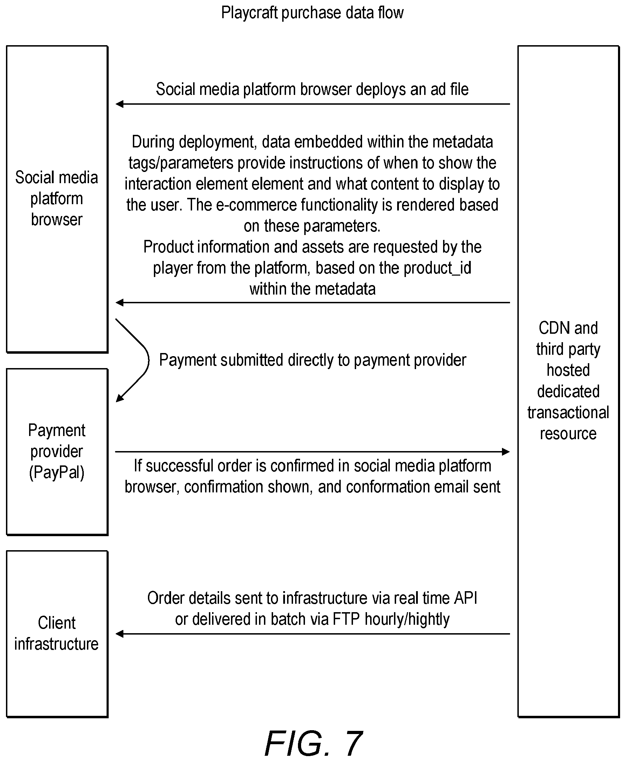

Figure 7 shows an example embodiment of the dataflow between the dedicated transactional resource and the e-commerce platform. The social media platform browser is configured to load the required content from the CDN hosted by the e-commerce platform based on the parameters in the ad file. Once the required ad file is uploaded to the social media platform, the ad file can be deployed on the social media platform browser.

While the ad file is being deployed on the social media platform browser and upon detecting interaction with the dedicated transaction URL, the metadata tags or parameters added by the content owner provide the social media platform browser with instructions as to where and when the social media platform browser should be redirected in order to display the dedicated transactional resource which enables the user to interact with and to complete a predefined action.

The dedicated transactional resource is also configured to render the progress of the subsequent stages of the transaction including any payment fulfilment requirements, the progress is rendered via the social media platform browser with all data processing being completed in the background via dedicated APIs and communicated via integration modules. The user is only presented with a summary of the progress and can complete the required action before returning to the social media platform browser upon completion of the transaction.

Any order placement and confirmation emails are subsequently communicated to the user via the existing mechanisms in place with the third party applications being used in the background.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein, and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

## Claims

1. A method for displaying an ad file within a social media platform, comprising the steps of:
deploying the ad file to the social media platform;
displaying the content of the ad file within a social media platform browser,
including an interaction element which includes a transaction URL for a dedicated transactional resource associated with the ad file;
detecting a user input associated with the interaction element; and,
redirecting the social media platform browser to the transaction URL.

2. A method according to claim 1, wherein the transaction URL is a dedicated transaction resource subdomain hosted on behalf of the ad owner by a third party.

3. A method according to claim 1 or 2, wherein the content associated with the dedicated URL is limited to only relate to the content of the ad file.

4. A method according to any preceding claim, wherein the transactional resource provides options for transaction fulfilment from two or more third party systems.

5. A method according to any preceding claim, comprising the step of uploading the ad file to multiple social media platforms via a single interface.

6. A method according to any preceding claim, wherein the interaction element is defined by one or more parameters/requirements of the social media platform browser.

7. A method for displaying an ad file of any of claims 1-5, wherein the interaction element is defined by the one or more parameters stored within in the ad file.

8. A method according to any preceding claim, wherein the transactional resource relates to a transaction consisting of one or more of: a data submission form, purchasing an item, making a booking, making a donation, and registering for a service.

9. A method according to any preceding claim, wherein the ad file is served on one of:
an ad server;
a dedicated content delivery network (CDN);
a dedicated database; and,
a social media post.

10. A method according to any preceding claim, wherein the dedicated transactional resource is an e-commerce transaction interface.

11. A method according to any preceding claim, wherein the ad file comprises one or more of a music video, a film, an advertisement, a video clip, and a social media post.

12. A method according to any preceding claim, wherein the ad file includes information relating to the location of and type of interaction icon to be displayed to the user.

13. A method according to any preceding claim, wherein the ad file is defined using one of:
a HTML5 language;
javascript; and,
other suitable technical architecture.

14. A method according to any preceding claim, wherein the dedicated transactional resource is configured to communicate with one or more external transaction services.

15. A method according to claim 14, wherein the one or more external transaction services includes one or more of:
a payment provider;
an order fulfilment provider; and,
a manufacturer.

16. A method according to claim 14, wherein displaying the ad file comprises loading the content from the ad file or retrieving the content from a content delivery network as defined within the ad file.

17. A computer program product comprising instructions for performing the method of any preceding claim.

18. A system for displaying an ad file within a social media platform browser, the system comprising:
an ad file editor module for defining the content of a dedicated transactional resource associated with the content of the ad file and defining a transaction URL to the dedicated transactional resource.

19. A system according to claim 18, wherein the interaction element is associated with the content of the ad file and linked to the transaction URL.

20. A system according to claim 18, wherein the dedicated transactional resource is configured to communicate with one or more external transaction services in response to detecting user input with the associated interaction element within the social media platform browser.

21. A system according to claim 18, wherein the dedicated transactional resource is an e-commerce transaction interface.
